# EUROPEAN PATENT SPECIFICATION

(11) **EP 3 735 815 B1**
(45) Date of publication and mention of the grant of the patent: **12.07.2023**
(21) Application number: 19173612.3
(22) Date of filing: 09.05.2019
(51) Int. Cl.: A01D 43/08

(54) **APPARATUS FOR DIRECTING A HARVESTED CROP OUTPUT FROM AN AGRICULTURAL HARVESTER**
VORRICHTUNG ZUM LEITEN EINER ERNTEGUTAUSGABE AUS EINER LANDWIRTSCHAFTLICHEN ERNTEMASCHINE
APPAREIL POUR DIRIGER UNE SORTIE DE CULTURE RÉCOLTÉE D'UNE MOISSONNEUSE AGRICOLE

(43) Date of publication of application: 11.11.2020
(73) Proprietor: CNH Industrial Belgium N.V., 8210 Zedelgem (BE)
(72) Inventor: VANTHOURNOUT, Jonas, 8210 Veldegem (BE); VAN BELLEGHEM, Stijn, 9990 Maldegem (BE); BLANCKE, Jeffrey, 8720 Markegem (BE)
(74) Representative: CNH Industrial IP Department

(56) References cited:
- EP-A- 2 605 634
- EP-A1- 0 666 018
- EP-A1- 1 344 446
- DE-U1- 29 700 426

## Description

### TECHNICAL FIELD

The present disclosure relates to apparatus for use with an agricultural harvester, and particularly to apparatus comprising a spout and deflector for directing harvested crop output from an agricultural harvester.

### BACKGROUND

Conventional agricultural harvesters, particularly forage harvesters, harvest crops before or while expelling them for collection in a container. The container is typically part of a trailer pulled by a tractor driving alongside or behind the harvester. To deliver the harvested crop to the container, the harvester has a spout through which the crop is expelled at high speed. The spout can be positioned so that the crop is appropriately directed towards the container or specific sections of the container.

When a container is pulled by a tractor driving behind the harvester, the crop is propelled rearwards over the tractor to reach the container. When a container is pulled by a tractor driving alongside the harvester, the spout is pivoted to the container and a deflector positioned at the end of the spout is used to deflect the crop downwardly into the container. To permit both possibilities, and for more flexibility and accuracy generally, the deflector is typically movable between a number of positions to allow for a variable redirection of the crop leaving the spout so that the crop is appropriately directed for the particular container configuration used.

Conventional movable deflectors have two segments, the first segment being pivotally attached to the spout and the second segment being pivotally attached to the first segment. The segments are positioned to at least partially align with the plane of travel of the crop through the spout, and are pivotable so that redirection of the crop in a vertical direction can be achieved when desired. An actuator pivots the segments relative to the spout.

While a pivotable deflector of this type is useful in achieving redirection, the redirection of the crop is often abrupt, resulting in a severe slowing of the speed at which the crop leaves the spout. This is especially the case where the crop has to be redirected through 90 degrees to direct the harvested crop into a container directly beneath the end of the spout. The loss of speed arising from the abrupt redirection sometimes results in light crops such as grass causing blockages in the spout. This in turn may cause severe blockages and malfunction within the harvester.

Some deflectors in the prior art have more than two segments. For example, EP2605634 describes a deflector having three segments, a hydraulic actuator connected between the first and second segments, and two links connecting parts of the segments. However, the arrangement in EP2605634 lacks some ease of control, and the arrangement of the link arms relative to one another may cause unwanted interference that prevents the movement of the segments relative to one another in some circumstances. EP1344446 describes a deflector having an extendible segment aligned with the spout end and two pivotable segments. DE 297 00 426 U1 discloses a forage harvester with a deflector consisting of two segments on the spout movable about a horizontal axis of rotation.

It is an aim of the present invention to address one or more of the disadvantages associated with the prior art.

### SUMMARY OF THE INVENTION

According to an aspect of the present invention there is provided apparatus for directing a harvested crop output from an agricultural harvester. The apparatus comprises a spout having a channel for the harvested crop to travel along, a first end connectable to the agricultural harvester for receiving the harvested crop into the channel, and a second end for the harvested crop to exit the channel. The apparatus comprises a deflector at least partially aligned with the channel and the second end so that, in use, the flow of the harvested crop exiting the channel is directed by the deflector. The deflector comprises three consecutively arranged segments for directing the harvested crop output. The second end of the spout and the deflector are connected by a first segment of the three segments, a second segment of the three segments and the spout are connected by the first segment, and a third segment of the three segments and the spout are connected by the second and first segments. The segments are pivotable to change the alignment of the deflector with respect to the second end of the spout. The first segment is pivotable relative to the spout about a first pivot, the second segment is pivotable relative to the first segment about a second pivot, and the third segment is pivotable relative to the second segment about a third pivot. The apparatus comprises a link arrangement comprising at least three links for coordinating pivoting of the segments about their respective pivots. Each link connects a respective one of the three segments to the spout and is arranged to pivot said segment about its respective pivot. At least one of the links is an actuator connected at one end to the spout and connected at another end to one of the three segments.

The apparatus provides several advantages over the prior art. A first benefit is that the use of at least three segments allows the redirection of crop to be smoother. For example, when only two segments are used, each segment has to deflect the crop through a large angle. When three segments or more are used, each segment has to do less work on the crop, and so the deflection of the crop is smoother and less abrupt. By directing the crop in a less abrupt manner, the energy lost when the crop comes into contact with the deflector is reduced, and so the crop flows more quickly along the path dictated by the deflector. In other words, the crop maintains more of its speed using a deflector with three segments. As described in the background section above, a crop losing speed may result in a blockage in the spout channel. Crop directed using the three segment deflector does not lose as much speed, and so the potential for blockages is reduced as the crop clears the channel and deflector sooner. The reduced speed loss also results in a more focussed stream of harvested crop leaving the spout.

In addition to improving the distribution of the crop, the inclusion of more deflector segments provides a greater degree of variability in how the deflector is angled. The deflector beneficially allows an improved aim of the crop stream by the spout and deflector.

By connecting each of the links of the link arrangement to the spout, the relative movement of the segments is easily controllable, and the complexity of the deflector is reduced, thereby improving the ease with which the deflector can be mounted, repaired, or replaced. Furthermore, each of the links is braced against the spout so that mechanical stress between the segments is reduced, and so that the connection between the deflector and the spout is improved.

Each of the second and third links of the at least three links may comprise at least one rigid rod. The at least one rigid rod of the second link may be connected at one end to an actuator-unconnected segment and at another end to the spout. The at least one rigid rod of the third link may be connected at one end to another actuator-unconnected segment and at another end to the spout. The actuator-unconnected segments are the segments that an actuator is not connected to. So, for example, if the actuator is connected to the first segment, the first segment is the actuator-connected segment, and the actuator-unconnected segments are the second and third segments.

Forming the link arrangement using rigid rods connected between the spout and segments allows movement of one segment by the actuator to be replicated efficiently and accurately in other segments. Therefore, using a combination of actuator and rigid rods, the movement of the segments of the deflector is well coordinated and predictable.

The second link and/or the third link may comprise a pair of rigid rods. The rods of each pair of rods may be positioned on opposite sides of the deflector and spout. The rods of each pair of rods may connect to their respective segment at opposite sides of the segment and to the spout at opposite sides of the spout, the points of connection of each pair of rods to their segment being symmetrical about a central vertical symmetry plane of the segment and the points of connection of each pair of rods to the spout being symmetrical about a central vertical symmetry plane of the spout.

Use of pairs of rigid rods, particularly on either side of the deflector and spout, beneficially improves the coordination of the movement of the segments. The pairs of rigid rods provide greater stability, strength, and guidance to the segments and ensure that the correct movement path is maintained. Dual rods also provide redundancy in case one rod operates incorrectly.

The points of connection of the rod or rods of the second link to the spout may be the same as the points of connection of the rod or rods of the third link to the spout.

Connecting the rods of each link to the same point of connection reduces the complexity of the system. The movement of the segments relative to one another is made less complex and more predictable by the inclusion of this feature. Moreover, the connection of the rods to the same point aids with relative movement of the rods, which do not interfere with one another in use because they are connected to the same point on the spout.

The apparatus may comprise a pair of stops mounted on opposite sides of the second end of the spout. The stops may be arranged to prevent pivoting of the first segment beyond the stops. The stops may be the points of connection of the rods to the spout.

By incorporating a stop, a maximum pivot angle is defined. Defining a maximum pivot angle for the deflector is useful in ensuring that the reduction in speed of the crop when maximally deflected is as small as possible.

The actuator-connected segment may be the first segment, and the actuator-unconnected segments may be the second and third segments.

Alternatively, each of the three links may be an actuator, and the apparatus may further comprise a control system for coordinating actuation of the three actuators relative to one another.

Inclusion of three actuators rather than an arrangement having rods and actuators provides a high level of individual control over each segment and of the transition angles between them.

The third segment may partially overlap the second segment. The second segment may partially overlap the first segment. Overlapping segments ensure that all the harvested crop is directed by the deflector.

The apparatus may comprise a damping system connected to each of the three segments. The damping system may be configured to reduce vibration of the segments in use. Such vibration may follow from the play at the pivot points. The damping system may comprise a first spring set extending between the first segment and the second segment, and a second spring set extending between the second segment and the third segment. Each spring set may comprise a pair of springs. Optionally, the damping system may comprise a third spring set extending between the first segment and the second end of the spout.

It is important to reduce vibrations to reduce fatigue in the pivots, and/or connections between segments, and in the links.

Each segment may comprise a top portion extending between two parallel side portions, the top portion and side portions being orthogonal. The third segment may comprise a hinged flap connected to each side portion and a locking mechanism, the hinged flap movable in a plane of the top portion and the locking mechanism configured to lock the flap in place in a particular position. The hinged flap may be inwardly and outwardly movable between a first position for directing a harvested grass crop and a second position for directing a harvested corn crop.

According to an aspect of the invention, there is provided an agricultural harvester comprising the apparatus described above. The agricultural harvester may be a forage harvester.

### BRIEF DESCRIPTION OF THE DRAWINGS

One or more embodiments of the invention will now be described, by way of example only, with reference to the accompanying drawings, in which:
Figure 1 shows a side view of an agricultural harvester;
Figure 2 shows a perspective front view of the deflector and the end of the spout of Figure 1;
Figure 3 shows a perspective rear view of the apparatus shown in Figure 2;
Figure 4 shows a right side view of the apparatus shown in Figure 2;
Figure 5 shows a left side view of the apparatus shown in Figure 2; and
Figure 6 shows a bottom view of the apparatus shown in Figure 2.

### DETAILED DESCRIPTION

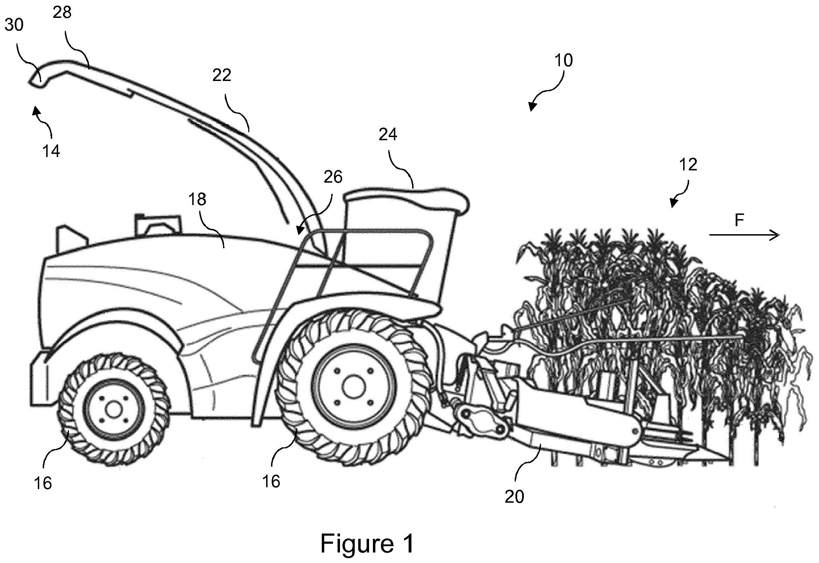

Figure 1 shows a type of agricultural harvester known as a forage harvester 10. The forage harvester 10 harvests a crop 12, chops it into small pieces and blows the chopped crop along a flow path from a blower to an outlet 14. From the outlet 14, the crop is directed towards a receiving vehicle, typically a container on a trailer pulled by a tractor (not shown). As can be seen in the side view of Figure 1, the forage harvester 10 has wheels 16, a chassis 18, a header 20, a spout 22, and an operator cab 24. The wheels 16 carry the chassis 18, which in turn supports the header 20. The header 20 is selected to harvest, i.e. cut and collect, the crop from the field as the forage harvester 10 goes in a fore direction, F. The harvested crop is processed and is chopped into small pieces, e.g., for storage in a silo and eventually for feeding to animals. The harvested crop is transferred through the harvester 10, chopped and blown into the spout 22. The crop is propelled along the spout 22 and directed along a trajectory so as to effectively and uniformly fill a container of the receiving vehicle.

The spout 22 has an elongate channel along which the crop travels. At a first end 26 of the spout 22, the spout 22 connects to the forage harvester 10 so that the channel can receive the harvested crop. At the other, second end 28 of the spout 22, the harvested crop can exit the channel. The forage harvester 10 propels the harvested crop into the channel with sufficient speed that the crop travels along the entire length of the channel and retains enough momentum when leaving the channel to continue along the trajectory defined by the spout 22 and its channel in order to reach the container of the receiving vehicle.

To effectively direct the crop towards an appropriately-positioned receiving vehicle, the spout 22 is moveable relative to the harvester 10 so that it can be rotated relative to the harvester 10 or its elevation can be changed relative to the harvester 10. To permit a greater level of control over the direction at which the crop travels when leaving the spout 22, a deflector 30 is attached to the second end 28 of the spout 22. The spout 22 and deflector 30 together form an apparatus for directing a harvested crop output from an agricultural harvester 10. The deflector 30 is movable relative to the spout 22 and is at least partially aligned with the second end 28 of the spout 22 from which the crop exits the channel. The deflector 30 redirects the crop through a desired angle, so that it can be directed in a specific direction. In this context, the term 'partially aligned' means that the deflector 30 is positioned in the region of the second end and forms an extension of the trajectory path defined by the spout 22.

For example, when a receiving vehicle such as a tractor is following the forage harvester 10, the container will be behind the tractor so the crop has to travel over the tractor to reach the container. In this scenario, the spout 22 is rotated to extend beyond the rear of the harvester 10 and elevated to ensure that the harvested crop will clear the tractor. The alignment of the deflector 30 is then adjusted to direct the harvested crop precisely towards the part of the container that the operator wishes to fill.

Alternatively, the receiving vehicle, i.e. the tractor, pulls its container alongside the forage harvester 10. The spout 22 can be rotated to be positioned to extend over the side of the forage harvester 10. When the container is close to the forage harvester 10, the second end 28 of the spout 22 is often directly above the container. Without a deflector 30, the crop would not be directed into the container; the container would have to be further away to receive the crop, which is often not possible because of standing crop or the border of the field. The deflector 30 is therefore able to redirect the harvested crop through an angle of approximately 90 degrees, so that the crop is no longer travelling along a substantially horizontal trajectory, but instead travels substantially vertically and downwardly into the container.

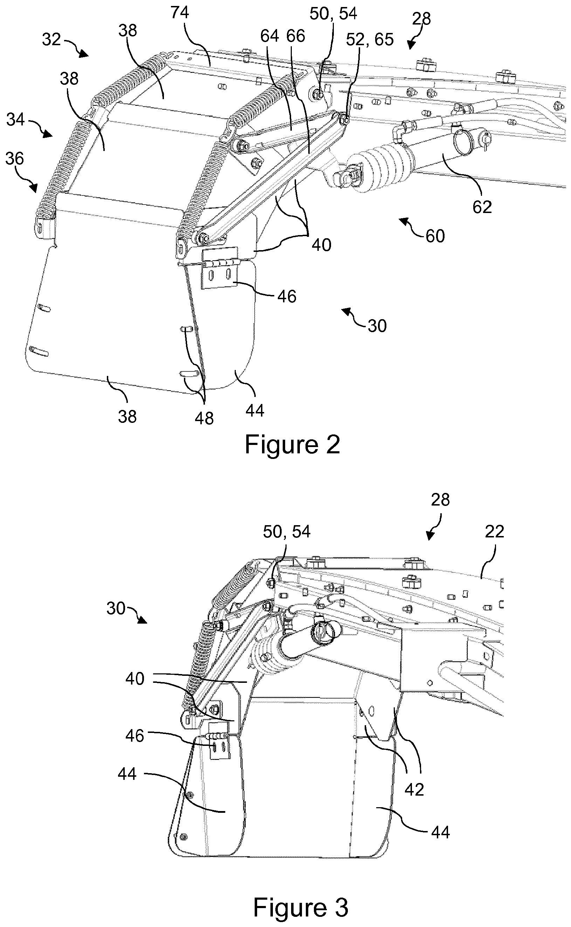

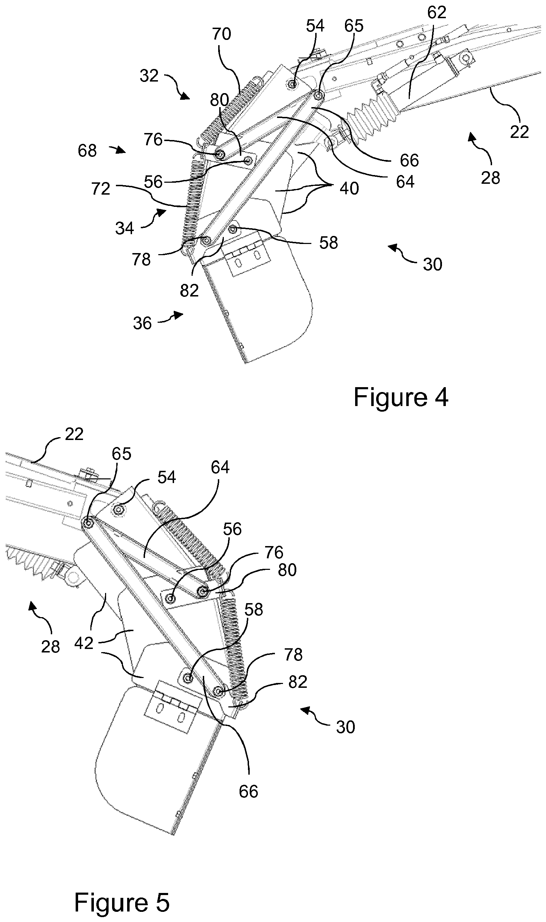

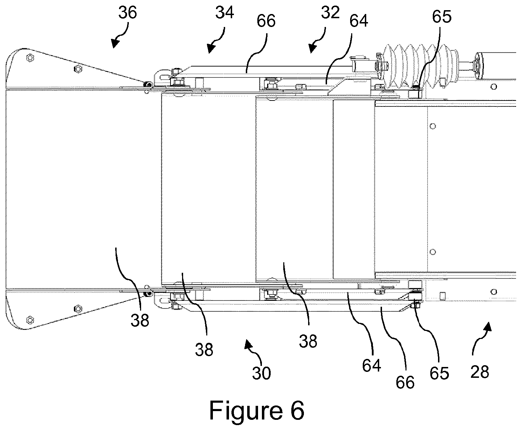

To ensure that the flow of the harvested crop from the outlet of the harvester 10 through the spout 22 and from the deflector 30 is as smooth as possible, the deflector 30 has the form shown in Figures 2 to 6. Maintaining a smooth flow of crop without a significant reduction in speed of the flow is highly important in reducing blockages within the harvester and channel.

Figures 2 to 6 show the second end 28 of the spout 22 and the deflector 30 in several views according to an embodiment of the invention. The deflector 30 comprises a first segment 32, a second segment 34, and a third segment 36. These three segments 32, 34, 36 are consecutively arranged, so that the second segment 34 is positioned between and connects the first and third segments 32, 36 and the segments 32, 34, 36 are connected in order of first to third.

Each segment 32, 34, 36 has a top portion 38 extending between two parallel side portions 40, 42. The top portion 38 and two side portions 40, 42 are substantially orthogonal to one another.

The three segments 32, 34, 36 are dimensioned and arranged in the deflector 30 so that the first segment 32 partially overlaps by the second segment 34, and so that the second segment 34 partially overlaps by the third segment 36. Two segments are considered to overlap if the top portions 38 of those segments are overlaid when the deflector 30 is assembled. In practice, this means that the width of the top portion 38 of the second segment 34 is greater than that of the first portion 32 so that the second segment 34 fits comfortably over the first segment 32 without interference. Similarly, the width of the top portion 38 of the third segment 36 is greater than that of the second portion 34 so that the third segment 36 fits comfortably over the second segment 34 without interference. Additionally, the side portions 40, 42 of the third segment 36 are further apart than the side portions 40, 42 of the second segment 34 and the side portions 40, 42 of the second segment 34 are further apart than the side portions 40, 42 of the first segment 32.

In addition to the top and side portions 38, 40, 42, the third segment 36 comprises a hinged flap 44 connected to each side portion 40, 42 by a respective hinge 46, as best seen in Figures 2 and 3. The top portion 38 also has a flared shape to which each flap 44 connects. Each flap 44 is inwardly and outwardly movable relative to the top portion 38, particularly in or parallel to a plane of the top portion 38, to change the cross-section of the third segment 36. During movement of the flaps 44, each flap 44 and the top portion 38 remain orthogonal, while the flaps 44 move from being parallel to one another to being angled relative to one another.

By moving the flaps 44, the cross-section of the third segment is changed to permit different crops to be directed correctly by narrowing or widening the flow of crop from the deflector. For example, a harvested grass crop requires a different configuration to a harvested corn crop. For directing a harvested grass crop, the flaps are typically maintained parallel to one another. For directing a harvested corn crop, the flaps are usually moved so that the ends of the flaps 44 that are remote from the hinge 46 are closer to one another than the hinged ends.

To maintain the flaps 44 in their operative positions for each crop, the third segment 36 has a locking mechanism 48. In this embodiment, the locking mechanism 48 takes the form of two pins for each flap that are movable within an aperture of the top portion 38 of the third segment 36 and can be fixed in each position using a bolt.

Generally referring to Figures 2 to 6 again, the segments 32, 34, 36 are connected to one another and to the spout 22. The segments 32, 34, 36 are also pivotable relative to one another and to the spout 22 in order to change the alignment of the deflector 30 with respect to the second end 28 of the spout 22.

The deflector 30 is connected to the second end 28 of the spout 22 by the first segment 32. The connection between the first segment 32 and spout 22 is formed by connectors 50 that are fixed to both side portions 40, 42 of the first segment 32 and extend through apertures (not shown) in either side of the second end 28 of the spout 22. The connectors 50 are movable within the apertures so that the first segment 32 can move relative to the spout 22.

To permit such movement of the first segment 32 relative to the spout 22, the first segment 32 is also pivotable relative to the spout 22 about the connectors 50, so that the aperture and connectors 50 form a first pivot 54.

Upward movement of the first segment 32 about the first pivot 54 is limited by the front upper edge of the segment touching the upper surface of the spout 22 at its rear end 28. Downward movement may be limited by a pair of stops 52 that extend from opposing sides of the spout 22 at its second end beneath the first pivot 54. The stops 52 interfere with the first segment 32 to prevent pivoting of the first segment 32 about the first pivot 54 beyond the point defined by the stops 52. The first segment 32 has a curved edge that is shaped to sit against the stops.

The second segment 34 is connected to the first segment 32 at a second pivot 56, thereby being connected to the spout 22 via the first segment 32. The second segment 34 is pivotable relative to the first segment 32 about the second pivot 56. The second pivot 56 comprises a pair of pins, each of which passes through respective overlapping side portions 40, 42 of the first segment 32 and second segment 34. The second segment 34 is moveable about the pins, so that there can be relative movement between the first and second segments 32, 34.

Similarly, the third segment 36 is connected at a third pivot 58 to the second segment 34, thereby being connected to the spout 22 via the second segment 34 and the first segment 32. The third segment 36 is pivotable relative to the second segment 34 about the third pivot 58. The third pivot 58 comprises a pair of pins, each of which passes through respective overlapping side portions 40, 42 of the second segment 34 and third segment 36. The third segment 36 is moveable about the pins, so that there can be relative movement between the second and third segments 34, 36.

To move the deflector 30 relative to the spout 22, the movement of the segments 32, 34, 36 about their pivots 54, 56, 58 is coordinated using a link arrangement 60. The link arrangement 60 links the movement of the segments 32, 34, 36 to one another. Using the link arrangement 60, the deflector 30 can be re-aligned with the channel so that harvested crop exiting the channel is directed in a desired direction by the deflector 30. The link arrangement 60 enables the coordination of the movement of the segments 32, 34, 36 so that the deflector 30 is moved to the position that corresponds with the desired direction.

The link arrangement 60 of the embodiment of Figures 2 to 6 comprises three links. Each of a first, second, and third links of the three links connects a respective one of the three segments 32, 34, 36 to the spout 22 and is arranged to pivot said segment 32, 34, 36 about its respective pivot 54, 56, 58.

In Figures 2 to 6, the first link of the three links is an actuator 62. The actuator 62 is a hydraulic, linear actuator. In alternative embodiments, other actuator types may be used such as electro-mechanical actuators or rotary actuators. In alternative embodiments, the first link may comprise an actuator such as a linear actuator and an extendable arm. The actuator 62 is connected at one end to a side of the spout 22 in the region of its second end 28. At its other end, the actuator 62 connects to a side portion 40 of the first segment 32 at a position removed from, e.g. below, the position of the first pivot 54. The actuator 62 is pivotally connected to each of the spout 22 and the first segment 32.

Linear extension of the actuator 62 increases the distance between the two ends of the actuator 62. As the first segment 32 is movable about its pivot 54 and the spout 22 effectively acts as a fixed point, the extension of the actuator 62 increases the distance between the ends of the spout 22 and the first segment 32 by moving the first segment 32 about its pivot 54.

When the first segment 32 is pivoted, the second and third segments 34, 36 are moved also by virtue of being connected to the first segment 32. The link arrangement 60, as discussed above, coordinates the movement of the segments 32, 34, 36 relative to one another about their pivots 54, 56, 58. To coordinate movement of the second and third segments 34, 36 about their pivots 56, 58, the second and third links, i.e. the links that are not the actuator 62, each comprise a pair of connecting rods 64, 66. The connecting rods 64, 66 are rigid.

The rods 64 of the second link extend between the second segment 34 and the spout 22, connecting at one end to the second segment 34, and at the other end to link pivot 65 on the spout 22. Link pivot 65 is also referred to as a point of connection 65. The rods 64 are positioned on opposite sides of the deflector 30 and spout 22, so that one rod of the pair is connected to the left side portion 42 of the second segment 32 and to the left side of the spout 22, and the other rod of the pair is connected to the right side portion 40 of the second segment 32 and to the right side of the spout 22.

The rods 64 are symmetrically arranged with respect to a central vertical symmetry plane of the deflector 30 and spout 22. The rods 64 are connected to the spout 22 by link pivots 65 near the stops 52. The link pivots 65 are adjacent the stops 52. The rods 64 are connected to the second segment 34 at respective points of connection 76 on the side portions 40, 42 of the second segment 34. The points of connection 76 are removed from the points of the second pivot 56 on each side. Plates 80 are provided on the portions of the second segment 34 that extend between the second pivot 56 and the point of connection 76 on each side. The plates 80 are fixed to the outer surface of the side portions 40, 42 for local reinforcement thereof.

As the second segment 34 is connected to the first segment 32 by the second pivot 56, pivoting of the first segment 32 by the actuator 62 causes rotational movement of the second pivot 56. During this movement, the second pivot 56 is maintained at a fixed distance from the first pivot 54. Without any control of the pivoting action of the second segment 34, the distance between a fixed point on the spout 22 and any point other than the point of connection between the second segment 34 and the first segment 32, i.e. the second pivot 56, remains undetermined with pivoting of the first segment 32.

However, the rods 64 are rigid and have a fixed length. As the rods 64 are connected between the spout 22 and the second segment 34, they act to maintain a constant distance between their points of connection to the spout 22 and the second segment 34. The rods 64 therefore cause pivoting of the second segment 34 about the second pivot 56 to maintain the constant distance. The point of connection of each rod 64 to the second segment 34 therefore follows a curved radius whose centre is the link pivot 65 when the first segment 32 moves. The circular trajectory of the second pivot 56 about first pivot 54 and the circular trajectory of the point of connection 76 about link pivot 65 together determine the trajectory of each point of the second segment 34.

Similarly, the rods 66 of the third link extend between the third segment 36 and the spout 22, connecting at one end to the third segment 36, and at the other end to the spout 22. The rods 66 are positioned on opposite sides of the deflector 30 and spout 22, so that one rod of the pair is connected to the left side portion 42 of the third segment 36 and to the left side of the spout 22, and the other rod of the pair is connected to the right side portion 40 of the third segment 36 and to the right side of the spout 22. The rods 66 are symmetrically arranged about a central vertical symmetry plane of the deflector 30 and spout 22. The rods 66 are connected to the spout 22 at the link pivots 65. As both pairs of the rods 64, 66 connect to the link pivots 65, the rods 64 of the second link are positioned inwardly of the rods 66 of the third link. The rods 66 are connected to the third segment 36 at respective points of connection 78 on the side portions 40, 42 of the third segment 36. The points of connection 78 are removed from the points of the third pivot 58 on each side. Plates 82 are provided on the portion of the third segment 36 that extends between the third pivot 58 and the point of connection 78 on each side. The plates 82 are fixed to the outer surface of the side portions 40, 42 for local reinforcement thereof.

As the third segment 36 is connected to the first segment 32 via the third pivot 58, second segment 34, and the second pivot 56, pivoting of the first segment 32 by the actuator 62 causes rotational movement of the third pivot 58. During this movement, the third pivot 58 is maintained at a fixed distance from the second pivot 56. Without any control of the pivoting action of the third segment 36, the distance between a fixed point on the spout 22 and any point other than the point of connection between the third segment 36 and the second segment 34, i.e. the third pivot 58, remains undetermined.

However, the rods 66 are rigid and have a fixed length. As the rods 66 are connected between the spout 22 and the third segment 36, they act to maintain a constant distance between their points of connection 65, 78 to the spout 22 and the third segment 36, respectively. The rods 66 therefore cause pivoting of the third segment 36 about the third pivot 58 to maintain the constant distance. The point of connection of each rod 66 to the third segment 36 therefore follows a curved radius whose centre is the link pivots 65 when the first segment 32 moves.

Therefore, extension or retraction of the actuator 62 causes a pivoting movement of the first segment 32 by virtue of the first pivot 54, of the second segment 34 by virtue of the second pivot 56 and second link, and the third segment 36 by virtue of the third pivot 58 and third link. Accordingly, the deflector 30 can move between several positions.

Particularly, the deflector 30 can move between a maximally deflecting position, in which the harvested crop is deflected through the greatest possible angle, and a minimally deflecting position, in which the harvested crop is deflected through the smallest possible angle. In the present embodiment, the defector is shown in the maximally deflecting position in Figures 2 to 6, in which the harvested crop is redirected through approximately 90 degrees and the first segment 32 rests against the stops 52. When the deflector 30 is in the minimally deflecting position, there is no redirection by the deflector 30, and the crop flows from the end of the channel without deflection. When in its minimally deflecting position, the deflector is substantially aligned with the spout so that the angle between the tangent line at the outlet of the spout and the segments of the deflector is, e.g., between 0 and 10 degrees, and preferably between 0 and 5 degrees. When in its maximally deflecting position, the angle between the tangent line of the spout and the segments of the deflector is, e.g., between 80 and 100 degrees, preferably between 90 and 100 degrees. This angle is generally also the angle through which the crop is redirected.

When the crop flows from the second end 28 of the spout 22 and strikes the segments 32, 34, 36 during redirection, potential vibrations in one or more of the segment 32, 34, 36 caused by the impact are avoided, or at least reduced, by incorporation of a damping system 68 in the deflector 30. The damping system 68 comprises two pairs of springs 70, 72.

The first pair of springs 70 extends between and connects the first segment 32 and to the second segment 34. The first pair of springs 70 connects to the first segment 32 at respective ends of a bar 74 attached to the top portion 38 of the first segment 32. The first pair of springs 70 connects to the second segments 34 at the levers that connect the pivots and point of attachment to the rods.

The second pair of springs 72 extends between and connects the second segment 34 and the third segment 36. The second pair of springs 72 connects to the second segment 34 at the levers that connect the second pivot 56 and points of attachment to the rods of the second link. The second pair of springs 72 connects to the third segment 36 at the levers that connect the third pivot 58 and points of attachment to the rods of the third link.

A single embodiment of the invention has been presented above. Alternative embodiments may be provided as will now be explained.

According to some alternative embodiments, the deflector comprises more than three segments. For example, the deflector may comprise four segments, five segments, six segments, or more. Accordingly, an equal number of links are required, so that a four segmented deflector has four links, with at least one link being an actuator, and a five segmented deflector has five links including at least one actuator.

In some embodiments, more than one link of the link arrangement is an actuator. In a particular embodiment, all the links of the link arrangement are actuators. Where more than one actuator is incorporated, a control system is also included to coordinate movement of the segments and actuators. The control system may be hydraulic.

In some embodiments, one or more of the links may consist of a single rod. If two links have one rod, these rods may be positioned on the same side of the deflector and spout or on opposite sides.

In some embodiments, the segments are non-overlapping. In some embodiments, the segments have the same or similar dimensions. Where the segments do not overlap, rigid or flexible intermediate connectors may extend between the segments to reduce gaps therebetween. The segments may alternatively or additionally be mounted to a frame about which they pivot, rather than being connected to one another.

In some embodiments, the actuator connects to the second segment and the rods connect to the first and third segments. In alternative embodiments, the actuator connects to the third segment and the rods connect to the first and second segments.

In some embodiments, the first link comprises two actuators, one actuator being positioned on each side. Again, a control system is also incorporated in these embodiments to coordinate operation of the dual actuators. Additional actuators may improve the speed and accuracy of the movement, and smaller actuators may be used as the force required from each actuator to move the segment is less than the force required from a single actuator to move all the segments.

In some embodiments, the rods connect to points on the spout other than adjacent the stops 52. For example, in some embodiments, the various rods connect to the distinct link pivots on the spout 22.

It will be appreciated that various changes and modifications can be made to the present invention without departing from the scope of the present application.

## Claims

1. Apparatus for directing a harvested crop output from an agricultural harvester (10), the apparatus comprising:
a spout (22) having a channel for the harvested crop to travel along, a first end (26) connectable to the agricultural harvester (10) for receiving the harvested crop into the channel, and a second end (28) for the harvested crop to exit the channel;
a deflector (30) at least partially aligned with the channel and the second end (28) so that, in use, the flow of the harvested crop exiting the channel is directed by the deflector (30), the deflector (30) comprising three consecutively-arranged segments (32, 34, 36) for directing the harvested crop output, the second end (28) of the spout (22) and the deflector (30) being connected by a first segment (32) of the three segments (32, 34, 36), a second segment (34) of the three segments (32, 34, 36) and the spout (22) being connected by the first segment (32), and a third segment (36) of the three segments (32, 34, 36) and the spout (22) being connected by the second and first segments (34, 32), wherein:
the segments (32, 34, 36) are pivotable to change the alignment of the deflector (30) with respect to the second end (28) of the spout (22), the first segment (32) being pivotable relative to the spout (22) about a first pivot (54), the second segment (34) being pivotable relative to the first segment (32) about a second pivot (56), and the third segment (36) being pivotable relative to the second segment (34) about a third pivot (58);
and
a link arrangement (60) comprising at least three links for coordinating pivoting of the segments (32, 34, 36) about their respective pivots (54, 56, 58), wherein at least a first link of the at least three links is an actuator (62), **characterized in that** each link connects a respective one of the three segments (32, 34, 36) to the spout (22) and is arranged to pivot said segment about its respective pivot, wherein the first link is connected at one end to the spout (22) and connected at another end to an actuator-connected segment (32) of the three segments (32, 34, 36).

2. The apparatus of claim 1, wherein each of the second and third links of the at least three links comprises at least one rigid rod (64, 66), the at least one rigid rod (64) of the second link being connected at one end to an actuator-unconnected segment (34) and at another end to the spout (22), and the at least one rigid rod (66) of the third link being connected at one end to another actuator-unconnected segment (36) and at another end to the spout (22).

3. The apparatus of claim 2, wherein the second link and/or the third link comprises a pair of rigid rods (64, 66), the rods of each pair of rods (64, 66) being positioned on opposite sides of the deflector (30) and spout (22), and connecting to their respective segment (34, 36) at opposite sides of the segment (34, 36) and to the spout (22) at opposite sides of the spout (22), the points of connection (76, 78) of each pair of rods (64, 66) to their segment (34, 36) being symmetrical about a central vertical symmetry plane of the segment (34, 36) and the points of connection (65) of each pair of rods (64, 66) to the spout (22) being symmetrical about a central vertical symmetry plane of the spout (22).

4. The apparatus of claim 2 or 3, wherein the second link and the third link each comprise a pair of rigid rods (64, 66), and wherein the points of connection (65) of the rods (64) of the second link to the spout (22) are the same as the points of connection (65) of the rods (66) of the third link to the spout (22).

5. The apparatus of claim 4, comprising a pair of stops (52) mounted on opposite sides of the second end (28) of the spout (22), the stops (52) arranged to prevent pivoting of the first segment (32) beyond the stops (52), and wherein the stops (52) are adjacent the points of connection (65) of the rods (64, 66) to the spout (22).

6. The apparatus of any of claims 2 to 5, wherein the actuator-connected segment is the first segment (32), and wherein the actuator-unconnected segments are the second and third segments (34, 36).

7. The apparatus of claim 1, wherein each of the three links is an actuator (62), and the apparatus further comprises a control system for coordinating actuation of the three actuators relative to one another.

8. The apparatus of any preceding claim, wherein the third segment (36) partially overlaps the second segment (34), and wherein the second segment (34) partially overlaps the first segment (32).

9. The apparatus of any preceding claim, comprising a damping system (68) connected to each of the three segments (32, 34, 36), the damping system (68) configured to reduce vibration of the segments (32, 34, 36) in use.

10. The apparatus of claim 9, wherein the damping system (68) comprises a first spring set (70) extending between the first segment (32) and the second segment (34) and a second spring set (72) extending between the second segment (34) and the third segment (36).

11. The apparatus of claim 10, wherein each spring set (70, 72) comprises a pair of springs.

12. The apparatus of any preceding claim, wherein each segment (32, 34, 36) comprises a top portion (38) extending between two parallel side portions (40, 42), the top portion (38) and side portions (40, 42) being orthogonal, and wherein the third segment (36) comprises a hinged flap (44) connected to each side portion (40) and a locking mechanism (48), the hinged flap (44) movable in a plane of the top portion (38) and the locking mechanism (48) configured to lock the flap (44) in place in a particular position.

13. The apparatus of claim 12, wherein the hinged flap (44) is inwardly and outwardly movable between a first position for directing a harvested grass crop and a second position for directing a harvested corn crop.

14. An agricultural harvester (10) comprising the apparatus of any preceding claim.

15. An agricultural harvester (10) according to claim 14, wherein the agricultural harvester (10) is a forage harvester.

## Patentansprüche

1. Vorrichtung zum Leiten einer Erntegut-Abgabe aus einer landwirtschaftlichen Erntemaschine (10), wobei die Vorrichtung umfasst:
ein Auswurfrohr (22) mit einem Kanal, durch den das Erntegut fließt, einem ersten Ende (26) zum Aufnehmen des Ernteguts in den Kanal, das mit der landwirtschaftlichen Erntemaschine (10) verbindbar ist, und einem zweiten Ende (28) zum Austreten des Ernteguts aus dem Kanal;
ein Ablenkblech (30), das zumindest teilweise mit dem Kanal und dem zweiten Ende (28) ausgerichtet ist, sodass, bei Verwendung, der Fluss des Ernteguts, der aus dem Kanal austritt, von dem Ablenkblech (30) geleitet wird, wobei das Ablenkblech (30) drei hintereinander angeordnete Segmente (32, 34, 36) zum Leiten der Erntegut-Abgabe umfasst, wobei das zweite Ende (28) des Auswurfrohrs (22) und das Ablenkblech (30) durch ein erstes Segment (32) der drei Segmente (32, 34, 36) verbunden sind, wobei ein zweites Segment (34) der drei Segmente (32, 34, 36) und das Auswurfrohr (22) durch das erste Segment (32) verbunden sind, und ein drittes Segment (36) der drei Segmente (32, 34, 36) und das Auswurfrohr (22) durch das zweite und erste Segment (34, 32) verbunden sind, wobei:
die Segmente (32, 34, 36) schwenkbar sind, um die Ausrichtung des Ablenkblechs (30) bezüglich des zweiten Endes (28) des Auswurfrohrs (22) zu verändern, wobei das erste Segment (32) relativ zu dem Auswurfrohr (22) um eine erste Drehachse (54) schwenkbar ist, wobei das zweite Segment (34) relativ zu dem ersten Segment (32) um eine zweite Drehachse (56) schwenkbar ist, und das dritte Segment (36) relativ zu dem zweiten Segment (34) um eine dritte Drehachse (58) schwenkbar ist; und
eine Verbindungsstückanordnung (60), die mindestens drei Verbindungsstücke zur Koordination des Schwenkes der Segmente (32, 34, 36) um deren jeweilige Drehachse (54, 56, 58) umfasst, wobei zumindest ein erstes Verbindungsstück der mindestens drei Verbindungstücke eine Betätigungseinrichtung (62) ist, **dadurch gekennzeichnet, dass** jedes Verbindungsstück ein jeweiliges der drei Segmente (32, 34, 36) mit dem Auswurfrohr (22) verbindet und angeordnet ist, um das Segment um seine jeweilige Drehachse zu schwenken, wobei das erste Verbindungstück an einem Ende mit dem Auswurfrohr (22) verbunden ist und an einem anderen Ende mit einem mit der Betätigungseinrichtung verbundenen Segment (32) der drei Segmente (32, 34, 36) verbunden ist.

2. Vorrichtung nach Anspruch 1, wobei jedes aus dem zweiten und dem dritten Verbindungsstück der mindestens drei Verbindungsstücke mindestens eine starre Stange (64, 66) umfasst, wobei die mindestens eine starre Stange (64) des zweiten Verbindungstücks mit einem Ende an einem nicht mit der Betätigungseinrichtung verbundenen Segment (34) und an einem anderen Ende mit dem Auswurfrohr (22) verbunden ist, und die mindestens eine starre Stange (66) des dritten Verbindungsstücks an einem Ende mit einem anderen nicht mit der Betätigungseinrichtung verbundenen Segment (36) und an einem anderen Ende mit dem Auswurfrohr (22) verbunden ist.

3. Vorrichtung nach Anspruch 2, wobei das zweite Verbindungstück und/oder das dritte Verbindungsstück ein Paar starrer Stangen (64, 66) umfasst, wobei die Stangen jedes Paars von Stangen (64, 66) auf gegenüberliegenden Seiten des Ablenkblechs (30) und des Auswurfrohrs (22) angeordnet sind, und die mit ihrem entsprechenden Segment (34, 36) auf gegenüberliegenden Seiten des Segments (34, 36) und mit dem Auswurfrohr (22) auf gegenüberliegenden Seiten des Auswurfsrohrs (22) verbunden sind, wobei die Verbindungspunkte (76, 78) jedes Paars von Stangen (64, 66) zu deren Segment (34, 36) symmetrisch zu einer zentralen vertikalen Symmetrieebene des Segments (34, 36) sind und die Verbindungspunkte (65) jedes Paars von Stangen (64, 66) zum Auswurfrohr (22) symmetrisch zu einer zentralen vertikalen Symmetrieebene des Auswurfrohrs (22) sind.

4. Vorrichtung nach Anspruch 2 oder 3, wobei das zweite Verbindungsstück und das dritte Verbindungsstück jeweils ein Paar starrer Stangen (64, 66) umfasst, und wobei die Verbindungspunkte (65) der Stangen (64) des zweiten Verbindungsstücks zu dem Auswurfsrohr (22) dieselben sind wie die Verbindungspunkte (65) der Stangen (66) des dritten Verbindungsstücks zu dem Auswurfrohr (22).

5. Vorrichtung nach Anspruch 4, umfassend ein Paar von Anschlägen (52), die auf gegenüberliegenden Seiten des zweiten Endes (28) des Auswurfrohrs (22) angebracht sind, wobei die Anschläge (52) angeordnet sind, um ein Schwenken des ersten Segments (32) über die Anschläge (52) hinaus zu verhindern, und wobei die Anschläge (52) an die Verbindungspunkte (65) der Stangen (64, 66) zum Auswurfrohr (22) angrenzen.

6. Vorrichtung nach einem der Ansprüche 2 bis 5, wobei das mit der Betätigungseinrichtung verbundene Segment das erste Segment (32) ist, und wobei die nicht mit der Betätigungseinrichtung verbundenen Segmente das zweite und dritte Segment (34, 36) sind.

7. Vorrichtung nach Anspruch 1, wobei jedes der drei Verbindungsstücke eine Betätigungseinrichtung (62) ist, und die Vorrichtung des Weiteren ein Steuerungssystem zur Koordination der Betätigung der drei Betätigungseinrichtungen relativ zueinander umfasst.

8. Vorrichtung nach einem der vorhergehenden Ansprüche, wobei das dritte Segment (36) teilweise das zweite Segment (34) überlappt, und wobei das zweite Segment (34) teilweise das erste Segment (32) überlappt.

9. Vorrichtung nach einem der vorhergehenden Ansprüche, umfassend ein Dämpfungssystem (68), das mit jedem der drei Segmente (32, 34, 36) verbunden ist, wobei das Dämpfungssystem (68) dazu eingerichtet ist, Schwingungen der Segmente (32, 34, 36) bei Verwendung zu reduzieren.

10. Vorrichtung nach Anspruch 9, wobei das Dämpfungssystem (68) einen ersten Federnsatz (70), der sich zwischen dem ersten Segment (32) und dem zweiten Segment (34) erstreckt, und einen zweiten Federnsatz (72) umfasst, der sich zwischen dem zweiten Segment (34) und dem dritten Segment (36) erstreckt.

11. Vorrichtung nach Anspruch 10, wobei jeder Federnsatz (70, 72) ein Paar von Federn umfasst.

12. Vorrichtung nach einem der vorhergehenden Ansprüche, wobei jedes Segment (32, 34, 36) einen oberen Abschnitt (38) aufweist, der sich zwischen zwei parallelen Seitenabschnitten (40, 42) erstreckt, wobei der obere Abschnitt (38) und die Seitenabschnitte (40, 42) senkrecht zueinander sind, und wobei das dritte Segment (36) mit jedem Seitenabschnitt (40) verbunden eine schwenkbare Lasche (44) und einen Arretiermechanismus (48) umfasst, wobei die schwenkbare Lasche (44) in einer Ebene des oberen Abschnitts (38) bewegbar ist und der Arretiermechanismus (48) dazu eingerichtet ist, die Lasche (44) in einer bestimmten Position zu arretieren.

13. Vorrichtung nach Anspruch 12, wobei die schwenkbare Lasche (44) zwischen einer ersten Position zum Leiten eines Grasernteguts und einer zweiten Position zum Leiten eines Maisernteguts nach innen und außen bewegbar ist.

14. Landwirtschaftliche Erntemaschine (10) mit der Vorrichtung nach einem der vorhergehenden Ansprüche.

15. Landwirtschaftliche Erntemaschine (10) nach Anspruch 14, wobei die landwirtschaftliche Erntemaschine (10) ein Feldhäcksler ist.

## Revendications

1. Appareil pour diriger une sortie de matières récoltées d'une machine de récolte agricole (10), l'appareil comprenant :
une goulotte (22) ayant un canal pour que la matière récoltée se déplace le long de celui-ci, une première extrémité (26) pouvant être reliée à la machine de récolte agricole (10) pour recevoir la matière récoltée dans le canal, et une seconde extrémité (28) pour que la matière récoltée sorte du canal ;
un déflecteur (30) au moins partiellement aligné avec le canal et la seconde extrémité (28) de sorte que, en utilisation, le flux de la matière récoltée sortant du canal est dirigé par le déflecteur (30), le déflecteur (30) comprenant trois segments (32, 34, 36) disposés consécutivement pour diriger la sortie de la matière récoltée, la seconde extrémité (28) de la goulotte (22) et le déflecteur (30) étant reliés par un premier segment (32) des trois segments (32, 34, 36), un deuxième segment (34) des trois segments (32, 34, 36) et la goulotte (22) étant reliés par le premier segment (32), et un troisième segment (36) des trois segments (32, 34, 36) et la goulotte (22) étant reliés par les deuxième et premier segments (34, 32), dans lequel :
les segments (32, 34, 36) peuvent pivoter pour modifier l'alignement du déflecteur (30) par rapport à la seconde extrémité (28) de la goulotte (22), le premier segment (32) pouvant pivoter par rapport à la goulotte (22) autour d'un premier pivot (54), le deuxième segment (34) pouvant pivoter par rapport au premier segment (32) autour d'un deuxième pivot (56), et le troisième segment (36) pouvant pivoter par rapport au deuxième segment (34) autour d'un troisième pivot (58) ;
et
un agencement de liaisons (60) comprenant au moins trois liaisons pour coordonner le pivotement des segments (32, 34, 36) autour de leurs pivots respectifs (54, 56, 58), dans lequel au moins une première liaison des au moins trois liaisons est un actionneur (62), **caractérisé en ce que** chaque liaison relie un segment respectif des trois segments (32, 34, 36) à la goulotte (22) et est agencé pour faire pivoter ledit segment autour de son pivot respectif, dans lequel la première liaison est reliée à une extrémité à la goulotte (22) et reliée à une autre extrémité à un segment relié à un actionneur (32) des trois segments (32, 34, 36).

2. Appareil selon la revendication 1, dans lequel chacune des deuxième et troisième liaisons des au moins trois liaisons comprend au moins une tige rigide (64, 66), l'au moins une tige rigide (64) de la deuxième liaison étant reliée à une extrémité à un segment non relié à un actionneur (34) et à une autre extrémité à la goulotte (22), et l'au moins une tige rigide (66) de la troisième liaison étant reliée à une extrémité à un autre segment non relié à un actionneur (36) et à une autre extrémité à la goulotte (22).

3. Appareil selon la revendication 2, dans lequel la deuxième liaison et/ou la troisième liaison comprend/comprennent une paire de tiges rigides (64, 66), les tiges de chaque paire de tiges (64, 66) étant positionnées sur des côtés opposés du déflecteur (30) et de la goulotte (22), et se reliant à leur segment respectif (34, 36) sur des côtés opposés du segment (34, 36) et à la goulotte (22) sur des côtés opposés de la goulotte (22), les points de connexion (76, 78) de chaque paire de tiges (64, 66) à leur segment (34, 36) étant symétriques par rapport à un plan de symétrie vertical central du segment (34, 36) et les points de connexion (65) de chaque paire de tiges (64, 66) à la goulotte (22) étant symétriques par rapport à un plan de symétrie vertical central de la goulotte (22).

4. Appareil selon la revendication 2 ou 3, dans lequel la deuxième liaison et la troisième liaison comprennent chacun une paire de tiges rigides (64, 66), et dans lequel les points de connexion (65) des tiges (64) de la deuxième liaison à la goulotte (22) sont les mêmes que les points de connexion (65) des tiges (66) de la troisième liaison à la goulotte (22).

5. Appareil selon la revendication 4, comprenant une paire de butées (52) montée sur des côtés opposés de la seconde extrémité (28) de la goulotte (22), les butées (52) étant disposées pour empêcher le pivotement du premier segment (32) au-delà des butées (52), et dans lequel les butées (52) sont adjacentes aux points de connexion (65) des tiges (64, 66) à la goulotte (22).

6. Appareil selon l'une quelconque des revendications 2 à 5, dans lequel le segment relié à l'actionneur est le premier segment (32), et dans lequel les segments non reliés à l'actionneur sont les deuxième et troisième segments (34, 36).

7. Appareil selon la revendication 1, dans lequel chacune des trois liaisons est un actionneur (62), et l'appareil comprend en outre un système de commande pour coordonner l'actionnement des trois actionneurs les uns par rapport aux autres.

8. Appareil selon l'une quelconque des revendications précédentes, dans lequel le troisième segment (36) recouvre partiellement le deuxième segment (34), et dans lequel le deuxième segment (34) recouvre partiellement le premier segment (32).

9. Appareil selon l'une quelconque des revendications précédentes, comprenant un système d'amortissement (68) relié à chacun des trois segments (32, 34, 36), le système d'amortissement (68) étant configuré pour réduire les vibrations des segments (32, 34, 36) en utilisation.

10. Appareil selon la revendication 9, dans lequel le système d'amortissement (68) comprend un premier jeu de ressorts (70) s'étendant entre le premier segment (32) et le deuxième segment (34) et un second jeu de ressorts (72) s'étendant entre le deuxième segment (34) et le troisième segment (36).

11. Appareil selon la revendication 10, dans lequel chaque jeu de ressorts (70, 72) comprend une paire de ressorts.

12. Appareil selon l'une quelconque des revendications précédentes, dans lequel chaque segment (32, 34, 36) comprend une partie supérieure (38) s'étendant entre deux parties latérales parallèles (40, 42), la partie supérieure (38) et les parties latérales (40, 42) étant orthogonales, et dans lequel le troisième segment (36) comprend un volet articulé (44) relié à chaque partie latérale (40) et un mécanisme de verrouillage (48), le volet articulé (44) étant mobile dans un plan de la partie supérieure (38) et le mécanisme de verrouillage (48) étant configuré pour verrouiller le volet (44) en place dans une position particulière.

13. Appareil selon la revendication 12, dans lequel le volet articulé (44) est mobile vers l'intérieur et vers l'extérieur entre une première position pour diriger une récolte d'herbe et une seconde position pour diriger une récolte de maïs.

14. Machine de récolte agricole (10) comprenant l'appareil selon l'une quelconque des revendications précédentes.

15. Machine de récolte agricole (10) selon la revendication 14, dans lequel la machine de récolte agricole (10) est une récolteuse-hacheuse.
